(19) Europäisches Patentamt
European Patent Office
Office européen des brevets

(11) **EP 2 142 862 B1**

(12) **EUROPEAN PATENT SPECIFICATION**

(45) Date of publication and mention
of the grant of the patent:
**17.07.2019 Bulletin 2019/29**

(21) Application number: **08735790.1**

(22) Date of filing: **03.04.2008**

(51) Int Cl.:
*F25D 3/10* *(2006.01)*     *F25D 31/00* *(2006.01)*
*B28C 7/00* *(2006.01)*     *C04B 40/00* *(2006.01)*

(86) International application number:
**PCT/EP2008/054049**

(87) International publication number:
**WO 2008/122582 (16.10.2008 Gazette 2008/42)**

(54) **METHOD AND USE OF A DEVICE FOR COOLING PROCESS WATER USED IN THE PRODUCTION OF FRESHLY MIXED CONCRETE**

VERFAHREN UND GEBRAUCH EINER VORRICHTUNG ZUR KÜHLUNG VON PROZESSWASSER VERWENDET IN DER PRODUKTION VON FRISCH GEMISCHTEM BETON

PROCÉDÉ ET UTILISATION D'UN DISPOSITIF POUR REFROIDIR L'EAU DE PRODUCTION DE BÉTON FRAÎCHEMENT MÉLANGÉ

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **04.04.2007 DE 102007016712**

(43) Date of publication of application:
**13.01.2010 Bulletin 2010/02**

(73) Proprietors:
• **L'Air Liquide Société Anonyme pour l'Etude et l'Exploitation des Procédés Georges Claude**
**75007 Paris (FR)**
Designated Contracting States:
**AT BE BG CH CY CZ DK EE ES FI FR GB GR HR HU IE IS IT LI LT LU LV MC MT NL NO PL PT RO SE SI SK TR**
• **Air Liquide Deutschland GmbH**
**40003 Dusseldorf (DE)**
Designated Contracting States:
**DE**

(72) Inventors:
• **GROSS, Gerhard**
**47877 Willich (DE)**
• **BEUSE, Johannes**
**40547 Dusseldorf (DE)**
• **KUTZ, Thomas**
**41379 Brüggen-Born (DE)**
• **THEISSEN, Friedel**
**41812 Erkelenz (DE)**
• **SPORING, Marc**
**47807 Krefeld (DE)**

(74) Representative: **De Vleeschauwer, Natalie Y.L.D.**
**L'Air Liquide S.A.**
**Direction Propriété Intellectuelle**
**75 Quai d'Orsay**
**75321 Paris Cedex 07 (FR)**

(56) References cited:
EP-A- 0 423 975    EP-A- 0 731 326
JP-A- 8 285 420    US-A- 3 771 718
US-A- 4 072 026    US-A- 4 300 355
US-A- 4 479 362    US-A- 4 488 407
US-A- 5 231 851

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The present invention relates to a method and the use of a device for cooling a liquid which after cooling is a suspension of frozen liquid in liquid, and is used as process water for use in the production of freshly mixed concrete.

Various approaches are known from the prior art for cooling liquids. For example, it is known to cool liquids by means of compression refrigeration machines based on absorption refrigeration processes or by indirect cooling via a heat exchanger. The liquids are frequently water, alkali solutions, acids, solvents and/or liquid foods. All processes mentioned here are complex in terms of apparatus, which makes the methods described uneconomic in particular when a liquid must be cooled batchwise, since then high standing times coincide with high apparatus requirements.

US 3 771 718, EP 0 423 975, US 4 488 407 and US 4 300 355 disclose methods and uses of devices for cooling process water for the production of freshly mixed concrete, but do not disclose the injection of a refrigeration-liquefied gas in drop form in said process water received in a container. Therefore, the object of the present invention is to specify a method for cooling process water used in the production of freshly mixed concrete which is simple to carry out in terms of apparatus with high cooling efficacy.

The method according to the invention for cooling a process water is based on introducing or injecting a coolant comprising a refrigeration-liquefied gas into the process water.

Preferably, the coolant consists entirely of a refrigeration-liquefied gas such as, for example, liquid nitrogen. Preferably, at least in part, in particular complete, vaporization of the refrigeration-liquefied gas occurs. By means of the vaporization enthalpy thereby applied and subsequent heating of the vaporized gas, cooling of the liquid proceeds, via which, in particular, an at least partial freezing of the liquid can be achieved, so that preferably a suspension of frozen liquid in liquid is formed.

According to the method of the invention, the coolant and in particular the refrigeration-liquefied gas are introduced into the liquid in drop form.

It is particularly advantageous in this context to achieve a distribution as uniform as possible of the drops of the liquefied gas in the liquid to be cooled. Continuous freezing of the liquid can thereby be particularly effectively prevented. According to the invention, ice crystals or conglomerates of the frozen liquid form thereby which form a suspension with the still unfrozen liquid. This suspension is used as process water for producing concrete.

For instance it is firstly possible to produce here freshly mixed concrete of a defined temperature, and secondly the resultant concrete is advantageous when used for producing reinforced concrete, and in particular steel-reinforced concrete, since here the tendency to corrosion is decreased. This is due to the fact that when liquid nitrogen is used as coolant, the atmospheric oxygen dissolved in the water is stripped out. In particular, this is taken to mean displacement of the atmospheric oxygen dissolved in the water by nitrogen. As a result of the decreased proportion of atmospheric oxygen dissolved in the water, the tendency to corrosion on reinforcing the concrete is greatly decreased. In particular, the nitrogen proportion or the proportion of dissolved nitrogen in the water after cooling to about 0°C is essentially 16 mg/m$^3$ (milligrams per cubic metre).

According to a further advantageous embodiment of the method according to the invention, the drop diameter is in the range from 1 to 3 mm.

This special drop size causes an essentially uniform distribution of the liquid gas in the liquid, so that an essentially uniform freezing occurs without the formation of a continuously frozen block of frozen liquid.

According to a further preferred embodiment of the method according to the invention, the refrigeration-liquefied gas comprises nitrogen.

In particular, the coolant consists entirely of liquid nitrogen. Liquid nitrogen has a relatively high vaporization enthalpy and in addition is relatively inexpensive to produce or simple to obtain. This makes inexpensive cooling of liquids possible.

According to a further advantageous embodiment of the method according to the invention, the coolant is introduced into the liquid at a velocity of 20 m/s and above.

This relatively high velocity causes a uniform distribution of drops of the coolant, so that good mixing of coolant and liquid takes place. This leads to a good cooling result and leads to the formation of relatively small ice pieces, so that a well-mixed suspension of frozen liquid in liquid is obtained.

According to a further advantageous embodiment of the method according to the invention, the liquid is agitated or circulated.

By this means the mixing of the drops of the coolant with the liquid to be cooled can be further improved, so that an additionally improved cooling result can be achieved. In particular, the circulation can prevent relatively large pieces of frozen liquid from forming.

According to another advantageous embodiment of the method, the amount of coolant added is controlled as a function of a fraction of the liquid which is frozen.

The fraction of liquid which is frozen, hereinafter for simplicity called the ice fraction, determines the refrigeration capacity which can later be achieved with the cooled liquid, since when the ice is melted, in addition the melting enthalpy must be applied, which can advantageously also be used for cooling. Therefore, control as a function of the ice fraction is advantageous, since in this case, finally, the amount of heat and enthalpy available for cooling can be established. Ice fractions of up to 30%, preferably up to 35%, particularly preferably up to 40%, or even in particular up to 50%, are advantageously possible.

According to a further advantageous embodiment of the method, the amount of coolant to be added is controlled in such a manner that up to 30% of the liquid is frozen.

According to a further advantageous embodiment of the method according to the invention, the amount of coolant to be added is determined by means of a heat balance calculation.

In this case, in particular the temperature of the liquid, the input amount of coolant, the temperature of the coolant, the temperature of the vaporized cryogenically liquefied gas on leaving the cooling process and/or the like is taken into account. In particular, by means of the heat balance calculation, an ice fraction can be preset.

According to a further advantageous embodiment of the method according to the invention, the coolant is added by at least one nozzle.

Nozzles are suitable, particularly, for producing drops of the coolant, so that using a corresponding design of the at least one nozzle, preferably a plurality of nozzles, good mixing of the coolant with the liquid, and thus a good cooling result and a homogeneous suspension of frozen liquid in liquid can be achieved.

According to a further advantageous embodiment of the method according to the invention, when no coolant flows in, the gas comprised in the coolant is added in gas form through the nozzles.

In this case, this can be produced by external vaporization of the cryogenically liquefied gas, or added from other sources. It is advantageous in this case that an at least partial closure of the nozzles by icing can be prevented, since the nozzles can be kept open. The injection of gas is suitable for this, since as a result an intervening operation with the addition of coolant is possible, and there is no contamination of the liquid with a further gas. As a result it is possible to use in first time intervals the nozzles not for addition of liquefied gas, but instead to add the gas in gas form, while at other time points no gas is added in gas form, but rather in liquid form. This makes possible an operation of the method which is particularly favourable in terms of costs and energy, in which icing of the nozzles is prevented.

According to a further aspect of the present invention, the use of a device for cooling process water to be used in the production of freshly mixed concrete is proposed for carrying out the method of the invention. The device comprises:

- a container for receiving the liquid and
- at least one nozzle for feeding a refrigeration-liquefied gas comprising the coolant in drop form.

According to an advantageous embodiment, the nozzles have an outlet diameter of 1 to 3 mm. The nozzles are according to the invention positioned in the lower two-thirds of the container, preferably in the lower half of the container and more preferably in the vicinity of the bottom of the container.

According to a further advantageous embodiment of the device according to the invention, the container comprises a gas collection space with gas removal line.

Preferably, this gas collection space is constructed above, or at, the top end, or at the top region of the container. This is advantageous, in particular, when the cryogenically liquefied gas, after vaporization, has a density which is less than the density of the liquid. This is the case, for example, when as coolant use is made of liquid nitrogen for cooling water.

According to a further advantageous embodiment, the device further comprises a transport unit for transporting and/or circulating the liquid.

This can ensure that, firstly, a mass flow rate of the cooled liquid can be ensured independently of a level of the liquid in the container, and secondly, by the circulation, complete freezing of the liquid can be prevented.

According to a further advantageous embodiment of the device according to the invention, means for comminuting frozen liquid are assigned to the transport unit which, for example, can comprise a pump.

Preferably, these means are combined with the transport unit or are constructed directly upstream of the transport unit. This advantageously leads to homogenization of the particle size distribution in the liquid, and in particular in the ice-water suspension, since it can thus be ensured that continuous freezing of the liquid is prevented, since relatively large ice fragments forming in the container are comminuted.

According to a further embodiment of the device according to the invention, this in addition comprises control means for controlling the feed of coolant. By this means, semiautomatic and/or fully automatic control of the addition of coolant may be implemented. Preferably, characteristics are transmitted to the control means which comprise, for example, the temperature in the container, the temperature of the coolant, the temperature of the exhaust gas, therefore of the vaporized coolant, the amount of liquid to be cooled and/or the amount of coolant to be added. A further characteristic can preferably be the level in the container, that is to say the amount of liquid present in the container.

According to an advantageous embodiment of the device, at least one temperature sensor is constructed in thermal contact with the container connected to the control means. Via this temperature sensor, preferably, the temperature of the liquid may be determined, either by measuring this directly and/or by determining the temperature of the liquid by the container temperature and if appropriate a computer-assisted model of the container.

The method according to the invention and/or the use of the device according to the invention are used for cooling process water, the cooled process water being thereafter used in the production of fresh concrete, i.e. unset mixed concrete.

Hereinafter the invention will be described in more detail with reference to the accompanying drawing, without restricting it to the details and exemplary embodiments shown there. In the diagrams:

Fig. 1 shows a first exemplary embodiment of a device according to the invention and

Fig. 2 shows a second exemplary embodiment in the present invention.

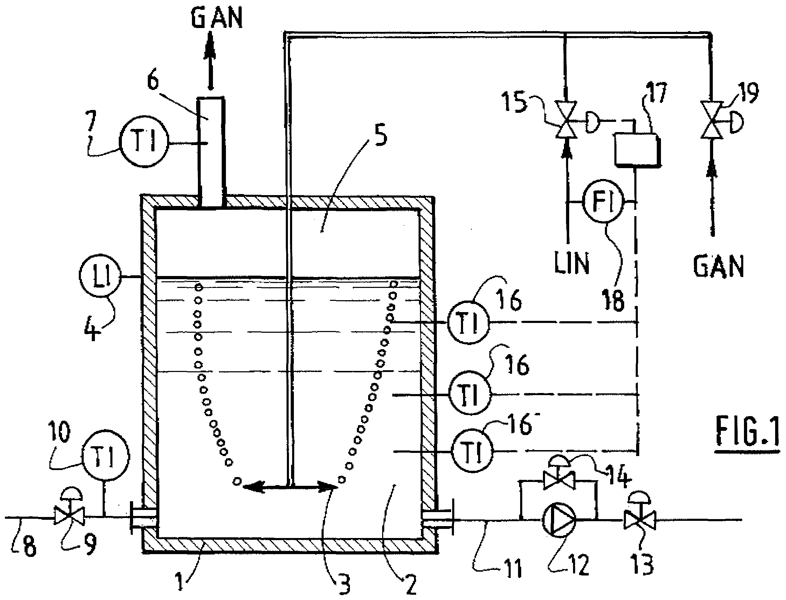

Fig. 1 shows diagrammatically a heat-insulated container 1 for cooling a liquid 2, such as water for example. In the lower region of the heat-insulated container 1, nozzles 3 are shown through which a coolant, which comprises a refrigeration-liquefied gas such as liquid nitrogen, for example, can be introduced into the water to be cooled. The diameter of the container 1 is about 2 m, the height is about 5 m. In the container there are charged approximately 10 $m^3$ of water, the water column is about 3.10 m. For measuring the amount of water to be cooled, the water column is monitored by a level sensor 4. Over the liquid 2 is constructed a gas collection space 5 with gas removal line 6. In the gas collection space 5, the vaporized gaseous nitrogen, also referred to as GAN, is collected and removed via the gas removal line 6. Via a first temperature sensor 7, which, for example, is constructed in the form of a thermocouple, a heat resistor or the like, the temperature of the vaporized nitrogen is determined. Customarily this is close to the liquid temperature.

The water 2 to be cooled is fed to the container 1 via a feed line 8 continuously or discontinuously controlled by an automatic shutoff valve 9. The water inlet temperature is monitored via a second temperature sensor 10. Instead of an automatic shutoff valve 9, a manual shutoff valve or other flow control measures can also be formed.

The water 2 which is cooled to the desired preset temperature, for example 0°C, can be taken off via the outlet line 11 continuously via a transport means 12, in particular a transport pump. This can be controlled by a shutoff valve 13, preferably an automatic shutoff valve 13. In the case, in particular, of discontinuous pumping off, the water 2 is circulated via an overflow valve 14. In the process of circulation, in particular, in a preferred manner, the liquid 2 in the container 1 can also be incorporated.

For cooling the water 2, in accordance with the preset temperature to be set, liquid nitrogen, hereinafter called LIN, is injected in a temperature-controlled manner via the control valve 15 through the nozzles 3 which are installed at the bottom of the container 1. The temperature in the container 1, in particular of the liquid 2, is measured by at least one third temperature sensor 16, in the present exemplary embodiment, three third thermosensors, which are constructed at different heights of the container 1. The measurements of the third temperature sensors 16 are transmitted to a control means 17, via which the control valve 15 can also be controlled. In addition, the amount of injected LIN is also measured with a suitable measuring device 18. The measurements of this measuring device 18 are also transmitted to the control means 17 and analysed there. The control means 17 in addition takes into account the theoretical water temperature which is performed by means of a heat balance calculation by the control means 17 taking into account the amounts of water measured by the level sensor 4 and the temperature of the gaseous nitrogen which is determined via the first temperature sensor 7. The temperature thus calculated is continuously compared with the water temperature determined by the third temperature sensors 16 and, based thereon, if appropriate the amount of LIN to be injected is corrected. This is advantageous, in particular, in the vicinity of the ice point in order to prevent an excessive LIN amount from being injected into the water, which leads to uncontrolled ice formation.

When the preset temperature is reached, the LIN feed is closed by the control valve 15 and the valve 19 is automatically opened. As a result a small amount of gaseous nitrogen is permanently injected into the container 1. The liquid nitrogen is thereby forced out of the nozzles 3 and corresponding feed lines and thus prevents water 2 from penetrating into the nozzles 3 and the feed, which water, owing to the low temperature of the nozzles 3, would freeze immediately. When the cooling process is continued, the LIN control valve 15 is opened again and the GAN valve 19 closed. Liquid nitrogen thereby flows again into the container 1.

Owing to injection of the cryogenic liquid nitrogen into the water 2, ice crystals form on the outlet orifices of the nozzles 3 which build up to what is termed a mushroom. The liquid nitrogen exits through an opening in the centre of this mushroom. Via a small mechanical tension, this ice armour breaks off from the nozzle 3 and is regularly formed again.

Hereinafter, the production of process water having a preset temperature of 0°C will be described. This water 2 is required for producing concrete and may contain additives. The production of quality concrete, for example for the construction of dams, bridges or what is termed white tank waterproof concrete is critical in particular in summer with high external temperatures without cooling the freshly mixed concrete. Excessively high concrete temperatures cause rapid evaporation of the water which can lead to contraction cracking. Especially in the case of high-volume structures, the heat of hydration released on setting must be taken into account, since the concrete expands owing to the temperature increase. If the concrete subsequently again cools down to ambient temperature, cracks form in the unreinforced concrete. Therefore, in the freshly mixed concrete, a temperature as low as possible is set.

In order to prevent crack formation in massive built structures such as dams or else watertight tanks, freshly mixed concrete temperatures between 8°C and 23°C are required. To maintain these temperatures, for example, the freshly mixed concrete in the transport vehicle is cooled down to 6°C by indirect injection of liquid nitrogen into the rotating drum. In this method, however, it is necessary to note that excessive frost in the concrete can cause structural changes.

Cooling the aggregates such as, for example, gravel or the makeup water before mixing is therefore far less problematic. In addition, therefore, the essential method parameters for producing concrete in a stationary mixer and the results necessitated by cooling the makeup water are summarized in a table.

**Comparative Example** 1

**Freshly mixed concrete composition and temperature of the feed materials**

| Feed materials | Fraction [kg/m$^3$] | Temperature [°C] |
|---|---|---|
| Cement | 160 | 40 |
| Blast furnace slag | 200 | 20 |
| Sand with 7% water fraction | 1000 | 18 |
| Gravel, particle size 6 to 16 mm and 16 to 32 mm | 900 | 18 |
| Water | 120 | 20 |
| Bulk density | 2380 | |

In the cooling of water by direct injection of LIN at a pressure of 5 bar, for a mixer volume of 4.5 m$^3$ at a water rate of 540 kg per mixture and a mixing time of 3 minutes at a refrigeration capacity of 251 kW and a liquid nitrogen rate of 2580 kg/h for a rate of water to be cooled of 10.8 m$^3$/h and a specific LIN consumption of 8.9 1 of liquid nitrogen per °C and per m$^3$ of concrete, a freshly mixed concrete temperature of 16.5°C was achieved. In the comparative example, with a water temperature of 20.5°C, a freshly mixed concrete temperature of 20°C was achieved. Therefore, the method according to the invention, and the use of a device according to the invention for cooling freshly mixed concrete, enables significant cooling of the freshly mixed concrete with low requirements of apparatus, and in particular makes possible the production of high-value concrete in hot weather.

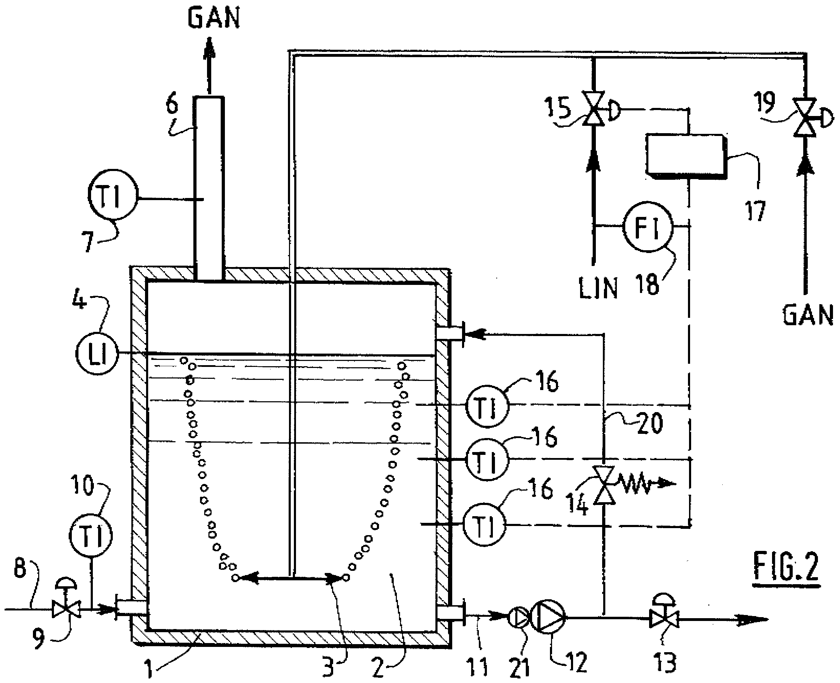

Fig. 2 shows an alternative embodiment of the method according to the invention and of the device according to the invention. Identical elements in the first and second exemplary embodiment are given the same reference signs. The exemplary embodiment set forth for Fig. 1 is hereby explicitly incorporated by reference. The exemplary embodiment shown in Fig. 2 has a transport means 12 which is connected to the container 1 by a bypass line. The water-ice suspension generated is thereby throttled via an overflow valve 14 and pumped back into the container 1 via the bypass line 20. The transport means, a circulation pump, has an upstream rotating blade device 21. By means of this, relatively large ice pieces are comminuted. By this additional circuit, the water-ice suspension in the container is made uniform and it is possible to generate at least up to 30% ice fraction in the water-ice suspension, without the water 2 freezing continuously in the container 1.

In addition, there is the possibility of utilizing, as circulation pump, a transport pump already present, which serves for transporting the water into a weighing device. After the charging of the weighing device, which customarily takes about 15 seconds, the transport pump is run in the circuit for the remaining time of the concrete mixing process and the water-ice suspension is pumped back into the container 1 via an overflow valve. A rotating blade device is likewise preferably connected upstream of this transport pump.

Hereinafter, the cooling effect on the freshly mixed concrete temperature will be described, when the process water required for concrete production, what is termed the makeup water, consists of a water-ice suspension having a 20% ice fraction.

**Comparative Example** 2

**Freshly mixed concrete composition and temperature of the feed materials**

| Feed materials | Composition [kg/m$^3$] | Temperature [°C] |
|---|---|---|
| Cement | 160 | 40 |
| Blast furnace slag | 200 | 20 |
| Sand with 7% water fraction | 1000 | 18 |
| Gravel, particle size 6 to 16 mm and 16 to 32 mm | 900 | 18 |
| Water | 120 | 20 |
| Bulk density | 2380 | |

In Comparative Example 2, without the cooling according to the invention, a freshly mixed concrete temperature of 20°C was achieved at 20.5°C water temperature. With cooling according to the invention, a water temperature of 0°C and a water-ice suspension having an ice fraction of 20% was achieved. For a mixing volume of 4.5 m$^3$ and a water rate of 432 kg per mixing, this was equivalent to an ice quantity of 108 kg. The mixing time was 3 minutes, the rate of water to be cooled per hour was 10.8 m$^3$/h. This corresponded to a refrigeration capacity of 450 kW and an LIN consumption of 4640 kg/h. This is equivalent to a specific LIN consumption of 9.1 1 of liquid nitrogen per °C and m$^3$ of concrete. A freshly mixed concrete temperature of 13.5°C was achieved thereby.

Hereinafter a description will be given of how, on the basis of a heat balance calculation, control of the rate of liquid nitrogen to be added can be carried out. Liquid nitrogen has a boiling point of 77.3 Kelvin and an enthalpy of vaporization of 198.6 kJ/kg at ambient pressure. In addition, liquid nitrogen can customarily be used as coolant, it is not vaporized indirectly in a heat exchanger, but is in direct contact with the liquid to be cooled. The liquid to be cooled is contaminated by the coolant, so that nitrogen is customarily well suited as coolant, since here an inert gas is present, which customarily does not react with the liquid to be cooled and frequently, in particular in the case of concrete also, for the most part outgases without problems.

With liquid nitrogen as coolant, it is possible to cool, in particular, without problems: process water which is used for producing concrete, sulphuric acid and/or alkali solutions. By direct input of LIN into the liquid 2 to be cooled, here, for example, a process water, heat is directly taken off from the water by the vaporizing nitrogen and the water 2 is thereby cooled. The resultant gaseous nitrogen first has boiling temperature and then ascends in the water as a host of gas bubbles. The host of gas bubbles warms and further cools the water. The temperature of the gaseous nitrogen equilibrates to that of the water bath and leaves it, in the case of sufficient height and therefore sufficient residence time, with the same temperature as that of the water bath. A cooling action as good as possible is achieved when the liquid nitrogen is introduced in drop form distributed as uniformly as possible over the cross section of the container 1. The drop diameter of the liquid nitrogen is determined by the exit diameter of the nozzles 3. Here, preferably, a diameter of the nozzles 3 of 1 to 3 mm and the use of a plurality to multiplicity of individual nozzles is proposed. These are preferably arranged at the bottom, or in the vicinity of the bottom, of the container 1.

Radial exit velocities are preferably in ranges from 20 m/s and more. The number of nozzles 3 depends on the required maximum refrigeration capacity. As a result of the vaporizing nitrogen drops, a gas bubble host is formed which ascends with high velocity in the liquid column. Because of this highly turbulent mixing process, the liquid temperature will rapidly equilibrate not only in the axial direction, but also in the radial direction. Experiments have shown that a preferred water height corresponds to 1.5 times the container diameter or more.

The cold energy available in the LIN is thereby optimally utilized. The preset temperature to be set is controlled not only via the temperature, but is determined via the heat balance by means of a process computer. The LIN rate required for cooling the water 2 is calculated according to the formula

$$m_{LIN} = k \ast m_{water} \ast \Delta T / C1$$

Here, k is a correction factor which, especially, takes into account the wall cold losses of the container. k can be determined empirically. $m_{water}$ is the water rate in kg/h, $\Delta T$ the temperature difference in water and C1(pT) = 83.3 Kelvin. In this case a pressure of 5 bar in the liquid nitrogen is assumed. If after the ice temperature is reached, in addition liquid nitrogen is introduced into the cold water at 0°C, ice is abruptly formed in the form of snow slurry and ice pieces which are distributed in the manner of a suspension in the water owing to the intensive agitation.

Since the LIN rate required for a defined amount of ice can no longer be controlled via the temperature, since the temperature of the water 2 is unchanged at 0°C, in a particularly preferred manner the LIN rate required in the control means is calculated according to the formula

$$m_{LIN} = k * [(m_{water} * \Delta T / C1 + X_{ice} * m_{water} / C2)],$$

measured using a suitable measuring device 18 and added in accordance using a corresponding control valve 15, where $x_{ice}$ is the fraction of ice in the water and C2(p, T) = 1.05 at a pressure of 5 bar in the nitrogen tank.

It is possible thereby to set the ice fraction in the water at 0°C (ice temperature) via the added rate of liquid nitrogen and thus in a simple manner to increase the cold energy available in the water or water-ice suspension.

The method according to the invention and use of a device according to the invention make possible in an advantageously simple manner the production of cooled liquids which are used as process water in freshly mixed concrete production. In this case the enthalpy content of the coolant, preferably of liquid nitrogen, is utilized in a good manner by firstly using the enthalpy of vaporization and secondly utilizing the heating of the nitrogen after vaporization up to ice temperature for cooling the liquid.

**List of reference signs**

1  Container
2  Liquid
3  Nozzle
4  Level sensor (LI)
5  Gas collection space
6  Gas removal line
7  First temperature sensor (TI)
8  Feed line
9  Auto shutoff valve
10  Second temperature sensor (TI)
11  Outlet line
12  Transport means
13  Shutoff valve
14  Overflow valve
15  Control valve
16  Third temperature sensor (TI)
17  Control means
18  Measuring device (FI)
19  Valve
20  Bypass line
21  Blade device

**Claims**

1.  Method for producing fresh concrete comprising :

    - cooling a liquid (2) in a container (1), said liquid being process water, whereby a coolant comprising a refrigeration-liquefied gas is injected in drop form into the liquid (2), so that a suspension of frozen liquid (2) in the liquid (2) is formed, and
    - using the cooled liquid (2) in the form of a suspension of frozen-liquid (2) in the liquid (2) as process water in the production of freshly mixed concrete.

2.  Method according to Claim 1, in which the refrigeration-liquefied gas vaporizes completely.

3.  Method according to one of the preceding claims, whereby the liquid is agitated or circulated.

4.  Method according to Claim 3, in which drop diameters of 1 to 3 mm are present.

7

**5.** Method according to one of the preceding claims, in which the coolant is introduced into the liquid (2) at a velocity of 20 m/s (metres per second) and more.

**6.** Method according to one of the preceding claims, in which the amount of coolant to be added is controlled as a function of a fraction of the liquid which is to be frozen.

**7.** Method according to one of the preceding claims, in which the amount of coolant to be added is determined by means of a heat balance calculation.

**8.** Use of a device comprising:

- a container (1) and
- at least one nozzle (3) in the lower two-
- thirds of the container (1),

for cooling a liquid (2), the container (1) being used for receiving the liquid (2) to be cooled, said liquid being process water,
**characterized**:

- **in that** the at least one nozzle (3) is used to inject a coolant comprising a refrigeration-liquefied gas in drop form into the liquid (2) in the container (1) so that a suspension of frozen liquid (2) in liquid (2) is formed and
- **in that** the cooled liquid (2) in the form of a suspension of frozen liquid (2) in the liquid (2) is used as process water in the production of freshly mixed concrete.

**9.** Use according to Claim 8, in which the nozzles (3) have an outlet diameter of 1 to 3 mm (millimetres) .

**10.** Use according to Claim 8 or 9, in which the container (1) comprises a gas collection space (5) having a gas removal line (6).

**11.** Use according to one of Claims 8 to 10, the device having a transport unit (12) for transporting and/or circulating the liquid (2).

**12.** Use according to Claim 11, in which the transport unit (12) is connected to the container (1) in such a manner that a liquid circuit can be built up.

**13.** Use according to one of Claims 11 or 12, in which means (21) for comminuting frozen liquid (2) are assigned to the transport unit (12).

**14.** Use according to one of Claims 8 to 13, the device further comprising control means (17) for controlling the feed of coolant.


**Patentansprüche**

**1.** Verfahren zur Herstellung von frischem Beton, umfassend:

- Kühlen einer Flüssigkeit (2) in einem Behälter (1), wobei die Flüssigkeit Prozesswasser ist, wodurch ein Kühlmittel, umfassend ein kälteverflüssigtes Gas, tropfenweise in die Flüssigkeit (2) eingespritzt wird, sodass eine Suspension aus gefrorener Flüssigkeit (2) in der Flüssigkeit (2) gebildet wird, und
- Verwenden der gekühlten Flüssigkeit (2) in der Form einer Suspension aus gefrorener Flüssigkeit (2) in der Flüssigkeit (2) als Prozesswasser bei der Herstellung von frisch gemischtem Beton.

**2.** Verfahren nach Anspruch 1, wobei das kälteverflüssigte Gas vollständig verdampft.

**3.** Verfahren nach einem der vorstehenden Ansprüche, wobei die Flüssigkeit in Bewegung versetzt oder zirkuliert wird.

**4.** Verfahren nach Anspruch 3, wobei Tropfendurchmesser von 1 bis 3 mm vorliegen.

**5.** Verfahren nach einem der vorstehenden Ansprüche, wobei das Kühlmittel mit einer Geschwindigkeit von 20 m/s (Meter pro Sekunde) und mehr in die Flüssigkeit (2) eingeleitet wird.

**6.** Verfahren nach einem der vorstehenden Ansprüche, wobei die Menge an hinzuzufügendem Kühlmittel in Abhängigkeit von einem Anteil der zu gefrierenden Flüssigkeit gesteuert wird.

**7.** Verfahren nach einem der vorstehenden Ansprüche, wobei die Menge an hinzuzufügendem Kühlmittel mittels einer Wärmebilanzberechnung bestimmt wird.

**8.** Verwendung einer Vorrichtung, umfassend:

• einen Behälter (1) und
• mindestens eine Düse (3) in den unteren zwei Dritteln des Behälters (1) zum Kühlen einer Flüssigkeit (2), wobei der Behälter (1) zum Aufnehmen der zu kühlenden Flüssigkeit (2) verwendet wird, wobei die Flüssigkeit Prozesswasser ist, **dadurch gekennzeichnet, dass**:

- die mindestens eine Düse (3) verwendet wird, um ein Kühlmittel, umfassend ein kälteverflüssigtes Gas, tropfenweise in die Flüssigkeit (2) in dem Behälter (1) einzuspritzen, sodass eine Suspension aus gefrorener Flüssigkeit (2) in der Flüssigkeit (2) gebildet wird und
- dadurch, dass die gekühlte Flüssigkeit (2) in der Form einer Suspension aus gefrorener Flüssigkeit (2) in der Flüssigkeit (2) als Prozesswasser bei der Herstellung von frisch gemischtem Beton verwendet wird.

**9.** Verwendung nach Anspruch 8, wobei die Düsen (3) einen Auslassdurchmesser von 1 bis 3 mm (Millimeter) aufweisen.

**10.** Verwendung nach Anspruch 8 oder 9, wobei der Behälter (1) einen Gassammelraum (5) umfasst, der eine Entgasungsleitung (6) aufweist.

**11.** Verwendung nach einem der Ansprüche 8 bis 10, wobei die Vorrichtung eine Transporteinheit (12) zum Transportieren und/oder Zirkulieren der Flüssigkeit (2) aufweist.

**12.** Verwendung nach Anspruch 11, wobei die Transporteinheit (12) derart mit dem Behälter (1) verbunden werden soll, dass ein Flüssigkeitskreislauf aufgebaut werden kann.

**13.** Verwendung nach einem der Ansprüche 11 oder 12, wobei der Transporteinheit (12) Mittel (21) zur Zerkleinerung von gefrorener Flüssigkeit (2) zugeordnet sind.

**14.** Verwendung nach einem der Ansprüche 8 bis 13, wobei die Vorrichtung weiter Steuermittel (17) zum Steuern der Kühlmittelzufuhr umfasst.

**Revendications**

**1.** Procédé pour produire du béton frais comprenant :

- le refroidissement d'un liquide (2) dans un conteneur (1), ledit liquide étant de l'eau de gâchage, de sorte qu'un agent de refroidissement comprenant un gaz liquéfié de réfrigération est injecté sous forme de gouttes dans le liquide (2), de sorte qu'une suspension de liquide congelé (2) dans le liquide (2) est formée, et
- l'utilisation du liquide (2) refroidi sous la forme d'une suspension de liquide (2) congelé dans le liquide (2) en tant qu'eau de gâchage dans la production de béton fraîchement mélangé.

**2.** Procédé selon la revendication 1, dans lequel le gaz liquéfié de réfrigération se vaporise complètement.

**3.** Procédé selon l'une des revendications précédentes, de sorte que le liquide est agité ou mis en circulation.

**4.** Procédé selon la revendication 3, dans lequel des diamètres de goutte de 1 à 3 mm sont présents.

**5.** Procédé selon l'une des revendications précédentes, dans lequel l'agent de refroidissement est introduit dans le liquide (2) à une vitesse de 20 m/s (mètres par seconde) et plus.

6. Procédé selon l'une des revendications précédentes, dans lequel la quantité d'agent de refroidissement à ajouter est commandée comme une fonction d'une fraction du liquide qui doit être congelé.

7. Procédé selon l'une des revendications précédentes, dans lequel la quantité d'agent de refroidissement à ajouter est déterminée au moyen d'un calcul d'équilibre de chaleur.

8. Utilisation d'un dispositif comprenant :

• un conteneur (1) et
• au moins une buse (3) dans les deux tiers inférieurs du conteneur (1), pour refroidir un liquide (2), le conteneur (1) étant utilisé pour recevoir le liquide (2) afin d'être refroidi, ledit liquide étant de l'eau de gâchage,

**caractérisé** :

- **en ce que** l'au moins une buse (3) est utilisée pour injecter un agent de refroidissement comprenant un gaz liquéfié de réfrigération sous forme de gouttes dans le liquide (2) dans le conteneur (1) de sorte qu'une suspension de liquide (2) congelé dans le liquide (2) est formée, et
- **en ce que** le liquide (2) refroidi sous la forme d'une suspension de liquide (2) congelé dans le liquide (2) est utilisé en tant qu'eau de gâchage dans la production de béton fraîchement mélangé.

9. Utilisation selon la revendication 8, dans laquelle les buses (3) ont un diamètre de sortie de 1 à 3 mm (millimètres).

10. Utilisation selon la revendication 8 ou 9, dans laquelle le conteneur (1) comprend un espace de collecte de gaz (5) ayant une conduite d'enlèvement de gaz (6).

11. Utilisation selon l'une des revendications 8 à 10, le dispositif ayant une unité de transport (12) pour transporter et/ou faire circuler le liquide (2).

12. Utilisation selon la revendication 11, dans laquelle l'unité de transport (12) est reliée au conteneur (1) de telle sorte qu'un circuit de liquide puisse être créé.

13. Utilisation selon l'une des revendications 11 ou 12, dans laquelle un moyen (21) pour morceler le liquide (2) congelé est attribué à l'unité de transport (12).

14. Utilisation selon l'une des revendications 8 à 13, le dispositif comprenant en outre un moyen de commande (17) pour commander l'alimentation en agent de refroidissement.

FIG.1

FIG.2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 3771718 A
- EP 0423975 A
- US 4488407 A
- US 4300355 A